# EUROPÄISCHE PATENTSCHRIFT

(11) **EP 2 870 357 B1**
(45) Veröffentlichungstag und Bekanntmachung des Hinweises auf die Patenterteilung: **24.07.2019**
(21) Anmeldenummer: 13722456.4
(22) Anmeldetag: 15.05.2013
(51) Int. Cl.: F04B 43/04, F01N 3/20

(54) **FÖRDERMODUL FÜR EINEN BETRIEBS-/HILFSSTOFF ZUR NACHBEHANDLUNG VON ABGAS**
DELIVERY MODULE FOR OPERATING SUPPLIES FOR THE TREATMENT OF EXHAUST GAS
MODULE DE TRANSPORT D'UN AGENT AUXILIAIRE/ADJUVANT DE RETRAITEMENT D'EFFLUENTS GAZEUX

(30) Priorität: 06.07.2012 DE 102012211875
(43) Veröffentlichungstag der Anmeldung: 13.05.2015
(73) Patentinhaber: Robert Bosch GmbH, 70442 Stuttgart (DE)
(72) Erfinder: KNIS, Wolfram, 73529 Schwaebisch Gmuend (DE); WALETZEK, Christoph, 70327 Stuttgart (DE)
(86) Internationale Anmeldenummer: PCT/EP2013/059974
(87) Internationale Veröffentlichungsnummer: WO 2014/005750

(56) Entgegenhaltungen:
- EP-A1- 2 157 295
- EP-A1- 2 447 490
- DE-A1-102004 054 238
- DE-A1-102010 028 850
- DE-A1-102010 030 860
- US-A1- 2004 191 093
- US-A1- 2008 226 464

## Beschreibung

### Stand der Technik

DE 10 2004 002 078 A1 bezieht sich auf ein Ventil. Dieses Ventil ist insbesondere als Plattenventil ausgebildet und wird bei Membranpumpen eingesetzt. Das Plattenventil umfasst einen Ventilsitz und einen von einem Ventilgehäuse umgrenzten Ventilraum. Die Ventilplatte ist randseitig gehalten. Die Ventilplatte ist in einem Belager zwischen ihrer äußeren Randhaltung elastisch auf Zug vorgespannt, wobei die elastische Vorspannung mindestens so groß ist, dass durch eine Randeinspannung auftretende Verformungen kompensiert werden können. In einer bevorzugten Ausführungsvariante ist vorgesehen, dass die Ventilplatte randseitig formschlüssig gehalten und zwischen ihren äußeren Randhalterung und der Einbaulage elastisch auf Zug vorgespannt ist.

DE 296 20 094 U1 bezieht sich auf eine Membranpumpe. Die Membranpumpe umfasst einen ein Pleuel aufweisenden Kurbeltrieb sowie eine mit dem Pleuel verbundene elastisch ausgebildete Membrane. Die Membran weist eine formangepasste Membranoberseite auf und hat an ihrer einem Verdichtungsraum abgewandten Membranrückseite eine Befestigungsöffnung. Diese dient zum Einsetzen eines formangepassten, mit dem Pleuel verbundenen Befestigungsteiles. Es ist eine formstabile, mit dem Pleuel verbundene Membranabstützung vorgesehen, die die Membran auf ihrer Membranrückseite zumindest in einem Zentralbereich formangepasst abstützt. Die Membranabstützung liegt in einer oberen Totpunktlage quetschdruckfrei und im Wesentlichen flächig an der Membranrückseite an.

Die aus DE 296 20 094 U1 bekannte Membranpumpe wird in der Medizintechnik eingesetzt. Das Funktionsprinzip der Membranpumpe liegt darin, dass eine Arbeitsmembran mithilfe eines Aktors oszillierend betrieben wird und dadurch einen Saug- oder einen Druckhub ausführt. Mittels zweier Rückschlagventile wird eine definierte Förderrichtung vorgegeben, ferner der Betriebsdruck sowie der erforderliche Durchfluss erzeugt.

Bei den aus dem Stand der Technik bekannten Lösungen erfolgt eine Überwachung des Betriebsdruckes mit mindestens einem separaten Drucksensor, um eine Druckregelung im System zur Nachbehandlung von Abgasen sicherzustellen. Beim Ansaugen gasförmiger Medien, insbesondere einer Flüssigkeit, die Dampf-, Gas- oder Luftanteile enthält, kann eine Regelabweichung aufgrund eines schwankenden Betriebsdruckes entstehen, welche eine Eindosierung eines Betriebs-/Hilfsstoffes, insbesondere eines Reduktionsmittels in einen Abgasstrom erheblich erschweren, was die Zumessgenauigkeit betrifft.

DE 10 2004 054 238 A1 bezieht sich auf ein Dosiersystem mit einem Dosiermittel zum Dosieren einer Flüssigkeit, insbesondere zum Dosieren einer wässrigen Harnstofflösung zur Nachbehandlung von Abgasen aus Verbrennungsmotoren, wobei die Flüssigkeit in einer Normalbetrieb-Förderrichtung von einem Vorratstank durch das Dosiermittel in einen Abgasstrang förderbar ist. Wenigstens ein mit der Flüssigkeit beaufschlagter Bereich zwischen einer Dosierstelle und dem Vorratstank ist entgegengesetzt zu einer Normalbetrieb-Förderrichtung der Flüssigkeit entleerbar.

### Darstellung der Erfindung

Erfindungsgemäß wird vorgeschlagen, in einer Einrichtung zur Förderung eines flüssigen Mediums, insbesondere eines Betriebs-/Hilfsstoffes, wie z.B. eines Reduktionsmittels, welches Gas-, Luft-, oder Dampfanteile enthält, und die in einem Pumpmodus oder in einem Rücksaugmodus betrieben werden kann, eine Ansteuervorrichtung vorzusehen, die im Pumpmodus einen Hubmagneten für eine Fördermembran und im Rücksaugmodus einen Rücksaugmagneten zur Betätigung einer Rücksaugfördermembran ansteuert, wobei während des Betriebes der Magneten mittels einer Stromrücklesefunktion eine Drucküberwachung in der Ansteuervorrichtung erfolgt.

Die erfindungsgemäß vorgeschlagene Lösung ermöglicht den Aufbau eines Systems zur Nachbehandlung von Abgasen, ohne dass ein Einsatz eines separaten Drucksensors erforderlich wäre, da die Drucküberwachung mittels einer Stromdetektion beziehungsweise einer Stromrückmeldung durch kontinuierliche Messung der Ströme an den beiden in unterschiedlichen Modi betriebenen Magneten erfolgen kann. Werden die Fördermembran im Fördermodus beziehungsweise die Rücksaugfördermembran im Rücksaugmodus über Hubmagnete betätigt, so kann über die Magnetgeometrie eine exakte Hubeinstellung und Weiterleitung der notwendigen Wärmeenergie zum Auftauen der Fördereinrichtung bei niedrigen Außentemperaturen erreicht werden.

Im Rücksaugmodus erfolgt das Rücksaugen der im System vorhandenen Flüssigkeitsmenge über einen zusätzlichen Übergabestutzen. Der zusätzliche Übergabestutzen ist derart angeordnet, dass dieser - in Strömungsrichtung des Betriebs-/Hilfsstoffes zum Dosiermodul gesehen - hinter einem Druckventil und vor einem Druckpulsationsdämpfer mündet. Wird im Rücksaugmodus angesaugt, so kann dank des zusätzlichen Übergabestutzens, beziehungsweise der zweiten zusätzlichen Übergabestelle, das Reduktionsmittel aus der Dosierleitung selbst, aus dem Dosiermodul sowie aus dem Druckpulsationsdämpfer unmittelbar in die Tankeinheit rückgesaugt werden. Das gesamte Medium, einschließlich eventuell in der Flüssigkeit enthaltener gasförmiger Medien, wird bei Betätigung der Förderpumpe durch den zusätzlichen Übergabestutzen in den Tank zurückgefördert, so dass vermieden wird, dass gasförmige Medienanteile bis hin zum Dosiermodul vordringen. Gasförmige Medienanteile im Betriebs-/Hilfsstoff können im Hydraulikkreis zur Beeinträchtigung der Drucksteuerung führen.

Desweiteren ist durch die erfindungsgemäß vorgeschlagene Lösung ein Rücksaugen ausschließlich durch die Rücksaugpumpe vorgesehen.

In dem Fördermodul, beziehungsweise der Förderpumpe der erfindungsgemäß vorgeschlagenen Einrichtung sind ein Ansaugventil und ein Druckventil als federkraftgestützte Rückschlagventile vor und nach dem Elementenraum vorgesehen. Das Ansaugventil und das Druckventil sind in einer gemeinsamen Ventilbaugruppe angeordnet. An der gemeinsamen Ventilbaugruppe sind bevorzugt durch eine stoffschlüssige Befestigung in Gestalt zweier Radialschweißnähte ein Pumpenträger und der Hubmagnet zur Betätigung der Förderpumpe dicht aufgenommen. Der entscheidende Vorteil dieser Anordnung liegt darin, dass an der Ventilbaugruppe keinerlei Relativbewegungen auftreten. Wäre der Pumpenträger beispielsweise direkt mit dem Hubmagneten verbunden und in der Ventilbaugruppe eingespannt, könnten in einer derartigen Verbindung der Komponenten Relaxationserscheinungen auftreten, die sich einstellendes Spiel nach sich ziehen, welches sich wiederum in einer Beeinflussung der Förderkennlinie bemerkbar machen würde. Aufgrund der gewählten stoffschlüssigen Verbindung, die eine Relaxationsfreiheit ermöglicht, vermögen sich an der Ventilbaugruppe keinerlei Relativbewegungen einzustellen.

Das Ansaugventil und das Druckventil sind in Bezug auf den Pumpenträger durch zwei Dichtringe abgedichtet; ferner wird die Abdichtung zum Hubmagneten hin über die in der Förderpumpe vorgesehene den Elementenraum beaufschlagende Fördermembrane übernommen.

Bei Bewegung des Ankers ändert sich der Strom, der eine für die Bewegung des Ankers typischen Stromverlauf annimmt. Diese Veränderung, d.h. der Stromverlauf der Förderpumpe wird mittels einer Software im Ansteuergerät ausgewertet und als Information an das übergeordnete Steuergerät weitergeleitet. Über eine zugehörige Bedatungstabelle können die Werte jeweils auftretenden Drücken zugeordnet werden. Die Stromhöhe wird in Abhängigkeit von der Zeit ausgewertet Sobald sich eine markante Änderung ergibt, kann der Druck bestimmt werden. Ein sich einstellender charakteristischer Verlauf ist bei einem jeden Hub des Hubmagneten der Förderpumpe erkennbar und kann zur Druckauswertung herangezogen werden.

### Vorteile der Erfindung

Gegenüber den bisher aus dem Stand der Technik bekannten Lösungen zeichnet sich die erfindungsgemäß vorgeschlagene Vorrichtung dadurch aus, dass eine erhebliche Reduzierung erforderlicher Bauteile erreicht werden kann, die Baugröße reduziert werden kann sowie die Kosten zur Herstellung der erfindungsgemäß vorgeschlagenen Vorrichtung drastisch gesenkt werden konnten. Durch die erfindungsgemäß vorgeschlagene Lösung kann ein System zur Entlüftung bei Förderung eines Mediums mit Gasanteilen dargestellt werden. Ein zusätzliches Betätigen der Rücksaugpumpe kann als Unterstützung realisiert werden, sollte Luft angesaugt worden sein. Die Rückförderpumpe hat die Aufgabe, im Normalfalle nur eine bestimmte Menge des Betriebs-/Hilfsstoffes, d.h. des Reduktionsmediums aus der Leitung nach dem Abstellen des Fahrzeuges in den Vorratstank, in dem der Betriebs-/Hilfsstoff bevorratet wird, zurückzusaugen. Zusätzlich kann die Rückförderpumpe jedoch dafür verwendet werden, beim Auftreten von Luftblasen, die aus dem Vorratstank angesaugt werden könnten, diese möglichst schnell in den Tank zurückzubefördern. Dadurch kann verhindert werden, dass diese Luftblasen in die Leitung geraten, die sich zwischen dem Fördermodul und dem Dosiermodul erstreckt und das Mengenverhältnis sowie die Dosiervorgänge im Dosiermodul negativ beeinflussen.

Durch die erfindungsgemäß vorgeschlagene Lösung können exakt definierte Teilmengen rückgesaugt werden. Bei den aktuell bekannten Rücksaugpumpen ist die Rücksaugfördertoleranz sehr ungenau, so dass in der Regel die gesamte Menge an Betriebs-/Hilfsstoff, d.h. Reduktionsmittel zurückgesaugt wird. Dies erfordert jedoch einen höheren Zeitbedarf und führt zu einem längeren Nachlauf bei Stillstand des Fahrzeugs. Die erfindungsgemäß vorgeschlagene Rücksaugpumpe kann durch eine entsprechende Genauigkeit, die beispielsweise durch Distanz- und Einstellscheiben definiert werden kann, hinsichtlich der Rücksaugmenge, genauer gesagt eine Rücklaufteilmenge viel besser eingestellt werden.

Da bei der erfindungsgemäß vorgeschlagenen Lösung ein seitlich definiertes Schließverhalten von Ein- und Auslassventil realisiert werden kann, ist eine exakte Medienzuführung möglich. Die Verformungsgrade bei der Membran bzw. der Rücksaugpumpen-Membran sind reduziert, so dass sich eine von der absoluten Druckhöhe gering beeinflusste Mengenbilanz einstellt. Bei der erfindungsgemäß vorgeschlagenen Lösung besteht ferner die Möglichkeit, Druckspitzen zu dämpfen und eine bestimmte Druckstufe pro Hub zu realisieren. Mit der erfindungsgemäß vorgeschlagenen Lösung lässt sich pro Hub eine definierte Mengenförderung bei dementsprechender Frequenzansteuerung durch die Ansteuervorrichtung erreichen. Durch die Ausgestaltung der erfindungsgemäß vorgeschlagenen Vorrichtung lässt sich des Weiteren eine erhebliche Reduzierung von Geräuschemissionen sowohl im Pumpmodus als auch im Rücksaugmodus erreichen.

In Bezug auf die reduzierte Anzahl von Bauteilen, die zur Verwirklichung der erfindungsgemäß vorgeschlagenen Lösung erforderlich ist, ist festzuhalten, dass insbesondere ein Drucksensor eingespart werden kann, da die Ermittlung der jeweilige Druckhöhe durch eine Stromrücklesefunktion der Ströme der Betätigungsmagneten erfolgt.

### Kurze Beschreibung der Zeichnungen

Es zeigt:
- Figur 1: eine Prinzipskizze der erfindungsgemäß vorgeschlagenen Vorrichtung schematischer Darstellung der Komponenten,
- Figur 2: Darstellung einer Ventilbaugruppe,
- Figur 3: die Darstellung des Stromverlaufes an der Förderpumpe und der Bestromungsdauer,
- Figur 4: eine Detaildarstellung der in Figur 2 dargestellten Ventilbaugruppe mit federkraftgestütztem Ansaug- und Druckventil,
- Figur 5: eine Darstellung der Komponenten der Rücksaugpumpe mit Rücksaugfördermembran,
- Figur 6: eine Explosionsdarstellung der in den Figuren 2 und 4 dargestellten Ventilbaugruppe,
- Figur 7: eine Explosionsdarstellung der Komponenten der Rücksaugpumpe mit Rücksaugfördermembran und Pumpenträger,
- Figur 8: eine Explosionsdarstellung der an einem gemeinsamen Gehäuse integrierten Förder- und Rücksaugpumpe.

### Ausführungsvarianten

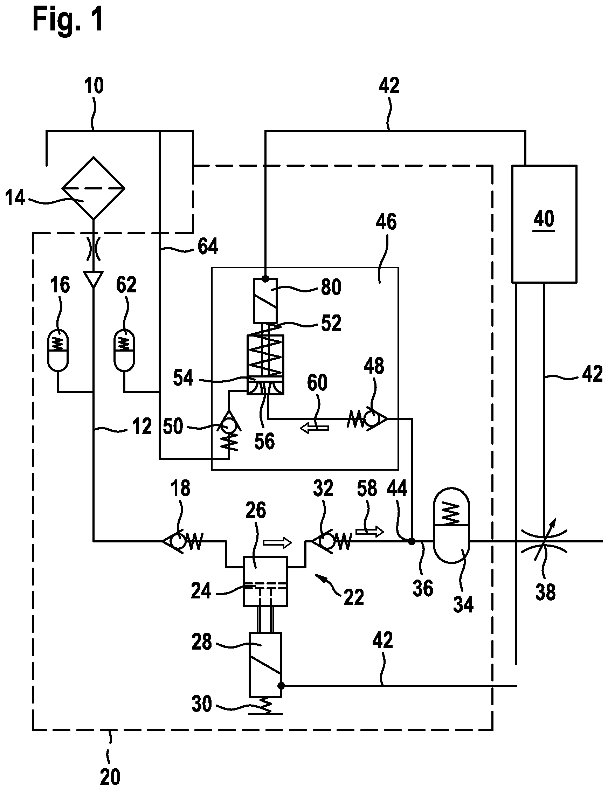

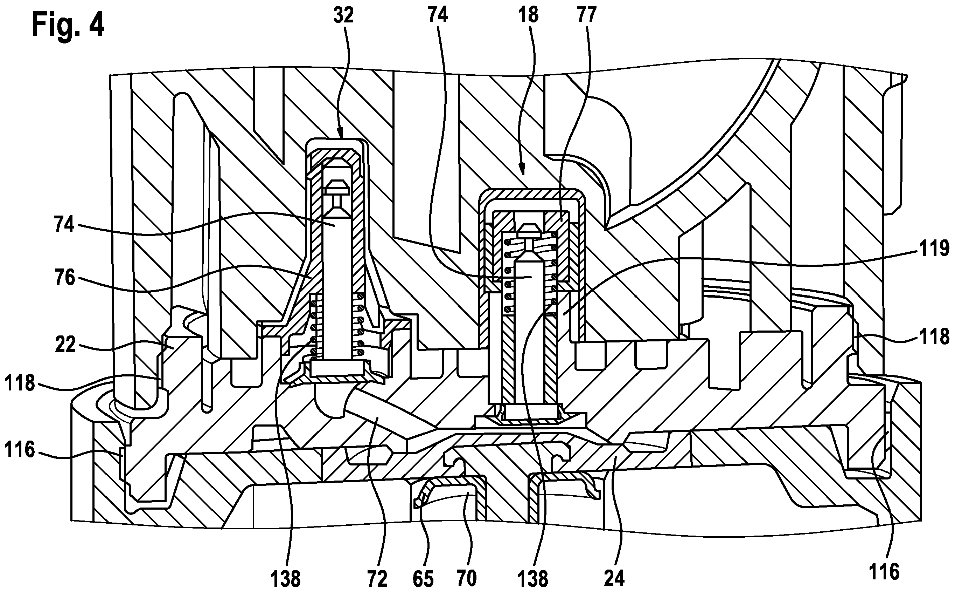

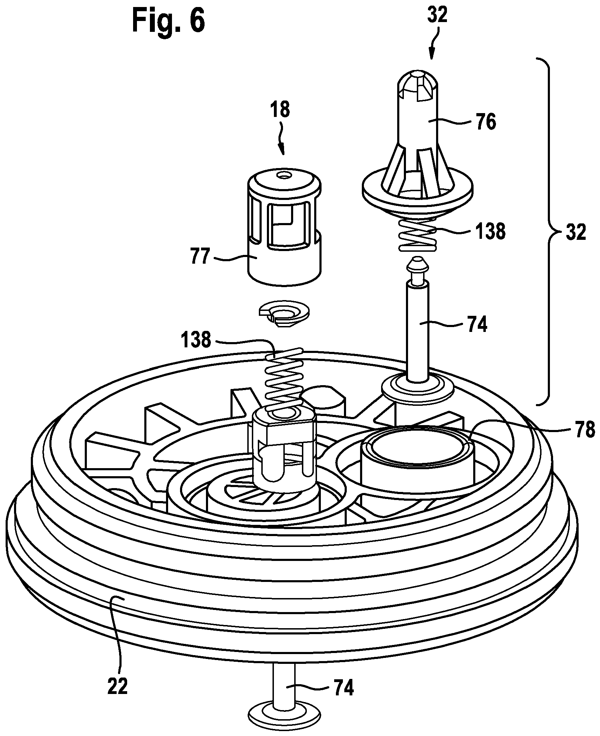

Der Darstellung gemäß Figur 1 ist eine schematische Darstellung der Komponenten der erfindungsgemäß vorgeschlagenen Vorrichtung zum Einbringen eines Reduktionsmittels in den Abgastrakt einer Verbrennungskraftmaschine zu entnehmen. Wie aus Figur 1 hervorgeht, umfasst die erfindungsgemäß vorgeschlagene Vorrichtung eine Tankeinheit 10, in dem ein Betriebs-/Hilfsstoff, beispielsweise ein Reduktionsmittel, eine Harnstoff-WasserLösung, aufgenommen ist. An einer Ansaugleitung 12 befindet sich ein Filter 14. Der Ansaugleitung 12 ist des Weiteren ein erster Eisdruckdämpfer 16 zugeordnet. In der Ansaugleitung 12 befindet sich ein Ansaugventil 18, welches beispielsweise als ein federkraftbeaufschlagtes Rückschlagventil ausgebildet ist. Das Ansaugventil 18 ist zusammen mit einem ebenfalls als federkraftbeaufschlagtes Rückschlagventil gestaltetes Druckventil 32 in einer Ventilbaugruppe 22 aufgenommen, die in Figur 4 und Figur 6 detaillierter dargestellt ist. In der Ventilbaugruppe 22 befindet sich des Weiteren ein Elementenraum 26, dem Betriebs-/Hilfsstoff nach Passage des Ansaugventiles 18 zuströmt. Der Elementenraum 26 wird durch eine Fördermembran 24 beaufschlagt, die ihrerseits mittels eines bestrombaren Hubmagneten 28 betätigt wird. Der Hubmagnet 28 wird auch einer Ansteuereinheit 40 mittels einer Ansteuerleitung 42 angesteuert. Des Weiteren übernimmt die Ansteuereinheit 40 die Ansteuerung eines Dosiermodules 38, über welches der Betriebs-/Hilfsstoff in den in Figur 1 nicht dargestellten Abgastrakt einer Verbrennungskraftmaschine eingespritzt wird. Darüber hinaus hat die Ansteuereinheit 40 die Aufgabe, über eine weitere Ansteuerleitung 42 einen Hubmagneten 80 anzusteuern, über den eine Rücksaugpumpe 46 betätigt wird.

Das in den Elementenraum 26 einströmende Reduktionsmittel wird über die durch den Hubmagneten 28 betätigte Fördermembran 24 verdichtet, so dass ein Druck aufgebaut wird. Bei Überschreiten des Öffnungsdruckes des Druckventiles 32 strömt der verdichtete Betriebs-/Hilfsstoff in die Dosierleitung 36 ein und in Pumprichtung 58 einem Druckpulsationsdämpfer 34 zu. Der Druckpulsationsdämpfer 34 befindet sich in der Dosierleitung 36 unmittelbar vor dem Dosiermodul 38, über welches der Betriebs-/Hilfsstoff in den Abgastrakt der Verbrennungskraftmaschine eingebracht wird.

Wie aus der Darstellung gemäß Figur 1 hervorgeht, befindet sich zwischen der Auslassseite des Druckventiles 32 und dem Druckpulsationsdämpfer 34 eine Abzweigstelle 44 eines Rücksaugstutzens, der sich zur Rücksaugpumpe 46 erstreckt.

Die Rücksaugpumpe 46 umfasst ein erstes Ventil 48, ein zweites Ventil 50, die analog zum Ansaugventil 18 und zum Druckventil 32 als federbeaufschlagte Rückschlagventile ausgebildet sein können. Mit Bezugszeichen 60 ist eine Rücksaugrichtung bezeichnet, in welche das System, d.h. die Dosierleitung 36, der Druckpulsationsdämper 34 und das Dosiermodul 38 im Rücksaugmodus entleert werden können. Das in den erwähnten Komponenten bevorratete Reduktionsmittel kann über die Rücksaugpumpe 46 im Rücksaugmodus unmittelbar über eine Rücksaugleitung 64 in die Tankeinheit 10 zurückgefördert werden.

Wie aus der Darstellung gemäß Figur 1 weiter hervorgeht, umfasst die Rücksaugpumpe 46 ebenfalls einen Elementenraum, in dem sich die Rücksaugfördermembran 54 befindet, die ihrerseits durch den Hubmagneten 80 betätigt wird. Wie vorstehend bereits erwähnt, wird der Hubmagnet 80 via Ansteuerleitung 42 über die Ansteuereinheit 40 betätigt. Die Rücksaugfördermembran 54 ist durch eine Druckfeder 52 beaufschlagt. Die Rücksaugfördermembran 54 schließt oder öffnet einen Dichtsitz 56. Bei Betätigung der Rücksaugpumpe 46 im Rücksaugmodus strömt bei geöffnetem Dichtsitz 56 der rückgesaugte Betriebs-/Hilfsstoff über die zweite Abzweigstelle 44 in den Rücksaugstutzen, über das erste Ventil 48 in den Elementenraum, das zweite Ventil 50 in die Rücksaugleitung 46 und von dort unter Umgehung des Filters 14 direkt in die Tankeinheit 10.

Über den ersten Eisdruckdämpfer 16, der in der Ansaugleitung 12 angeordnet ist, kann sich bei tiefer Außentemperatur ausdehnendes Medium, dessen Ausdehnung in der Größenordnung von 10 % liegt, aufgenommen werden. Das Ansaugventil 18 der Ventilbaugruppe 22 öffnet im Falle eines sich ergebenden Unterdruckes im Elementenraum 26 und lässt das Medium in den Elementenraum 26 einströmen. Im Falle eines noch nicht befüllten Tankfilters 14 bzw. Fördermoduls 20 mit dem Betriebs-/Hilfsstoff, insbesondere gefrierfähigen Reduktionsmittel, wird zunächst die Luft angesaugt und komprimiert. Das Ansaugventil 18 selbst wird mittels der Druckfeder bei Druckausgleich zurück in den Sitz gedrückt und schließt die Verbindung zur Tankeinheit 10 ab. Bei Druckerhöhung im Elementenraum 26 wird das saugseitige Ventil 18 geschlossen und das Druckventil 32 öffnet. Das komplette Hubvolumen wird komprimiert und aus dem Elementenraum 26 unter Druck hinausbefördert. Die Fördermembran 24 ist durch ein Blech unterstützt, so dass bei zunehmendem Druck eine möglichst geringe Verformung der Fördermembran 24 auftritt. Das Ansaugventil 18 und das Druckventil 32 sind auf einer gemeinsamen Ventilbaugruppe 22 aufgenommen. Die gemeinsame Ventilbaugruppe 22 stellt ein Bindeglied zwischen einem Pumpenträger und dem Hubmagneten 28 dar. An diesem sind zwei Radialschweißnähte 116, 118 ausgebildet, mit denen die beiden Komponenten, d.h. der Pumpenträger und der Hubmagnet 28 miteinander verbunden sind. Dadurch entstehen im Bereich der Ventilbaugruppe 22 keine Relativbewegungen, beispielsweise durch andernfalls auftretende Relaxationserscheinungen, die zu einer Verschiebung der Förderkennlinie führen würden. Der Hubmagnet 28, der den Druck aufbaut, weist eine Druckfeder 30 auf.

Im Fördermodus des Fördermodules 20 kann gasförmiges Medium aus dem Tankfilter 14 aufgenommen werden. Dies wird anhand der Stromüberwachung detektiert und zur Vermeidung von Schäden das gesamte Medium mittels Betätigung der Rücksaugpumpe 46 über die zweite Tankanbindungsstelle, d.h. die Abzweigstelle 44 in die Tankeinheit 10 rückgesaugt. Dieser Vorgang, der im Rücksaugmodus stattfindet, vermeidet die Zuführung gasförmiger Medien hin zum Dosiermodul 38. Ein jeglicher Luft- bzw. Gasanteil im Hydraulikkreis würde ansonsten zu einer Abweichung in der Drucksteuerung führen. Die Anordnung der Abzweigstelle, d.h. die Lage des Rücksaugstutzens 44 ist so platziert, dass die rückgeführte Menge unter Umgehung des Filters 14 zurückgepumpt wird, unmittelbar in die Tankeinheit 10.

Bei der hohen Beschleunigung des Tauchankers 70 bei Ausführung einer Hubbewegung führt diese zum Auftreten einer sehr hohen Druckspitze im System. Damit diese Druckspitze nicht zur Beschädigung anderer Bauteile führt, wird der Druckpulsationsdämpfer 34 eingesetzt. Dieser reduziert die Druckspitzen und begrenzt gleichzeitig die Druckerhöhung im System auf einen bestimmten voreinstellbaren Wert.

Die in Figur 1 dargestellte Rücksaugpumpe 46 fördert bei Stillstand des Fahrzeugs eine definierte Menge des Betriebs-/Hilfsstoffes, d.h. des gefrierfähigen Reduktionsmediums zurück in die Tankeinheit 10 um mögliche Gefrierschädigungen an den Peripheriekomponenten zu vermeiden. Um dies zu gewährleisten, wird eine Anordnung gewählt, bei der ein Rücksaugpumpenmagnet 80 durch eine Frequenzansteuerung einen Tauchanker 92 samt Rücksaugfördermembran 54 auf und ab bewegt. Im nicht betätigten Zustand liegt die Rücksaugfördermembran 54 auf dem Dichtsitz 56 und verschließt diesen mit ausreichender Dichtkraft gegen den anstehenden Betriebsdruck ab. Vorzugsweise ist eine Dichtlippe an der Rücksaugfördermembran 54 vorgesehen. Dadurch, dass die Dichtlippe an der Rücksaugfördermembran 54 vorgesehen ist, und nicht am Dichtsitz 56, kann ein Abbild im Werkstoff der Rücksaugfördermembran 54 vermieden werden, so dass sich andernfalls über längere Sicht einstellende Leckagen umgangen werden können. Mit der Druckfeder 52 wird der Tauchanker 92 mit der aufvulkanisierten Rücksaugfördermembran 54 auf den Dichtsitz 56 gemäß der Darstellung in Figur 1 gedrückt.

Wird nun der Rücksaugpumpenmagnet 80 durch Ansteuerung via Ansteuerleitung 42 von der Ansteuereinheit 40 aus bestromt, wird der Tauchanker 92 mit daran anvulkanisierter Rücksaugfördermembran 54 vom Dichtsitz 56 abgehoben. Im Elementenraum der Rücksaugpumpe 46 entsteht somit ein Unterdruck. Dieser Unterdruck führt zur Öffnung des ersten Ventiles 48, so dass Medium in Saugrichtung 60 in die Rücksaugpumpe 46 eintritt. Das erste Ventil 48 umfasst ein Dichtplättchen, welches an zwei Anbindungsstegen eingespannt ist. Durch den anstehenden Unterdruck wird dieses Dichtplättchen geöffnet und der Betriebs-/Hilfsstoff, d.h. das gefrierfähige Reduktionsmedium strömt ab.

Sobald der gesamte Hub ausgeführt ist und die Bestromung innerhalb eines Frequenzganges abgeschaltet wird, drückt die Druckfeder 52 den Tauchanker 92 samt Rücksaugfördermembran 54 zurück in deren Ausgangsstellung. Dadurch entsteht ein Überdruck, der zum Schließen des saugseitigen Ventils, d.h. des ersten Ventiles 48 und zum Öffnen des zweiten Ventiles 50 auf der Druckseite führt. Der Aufbau beider Ventile ist größtenteils identisch.

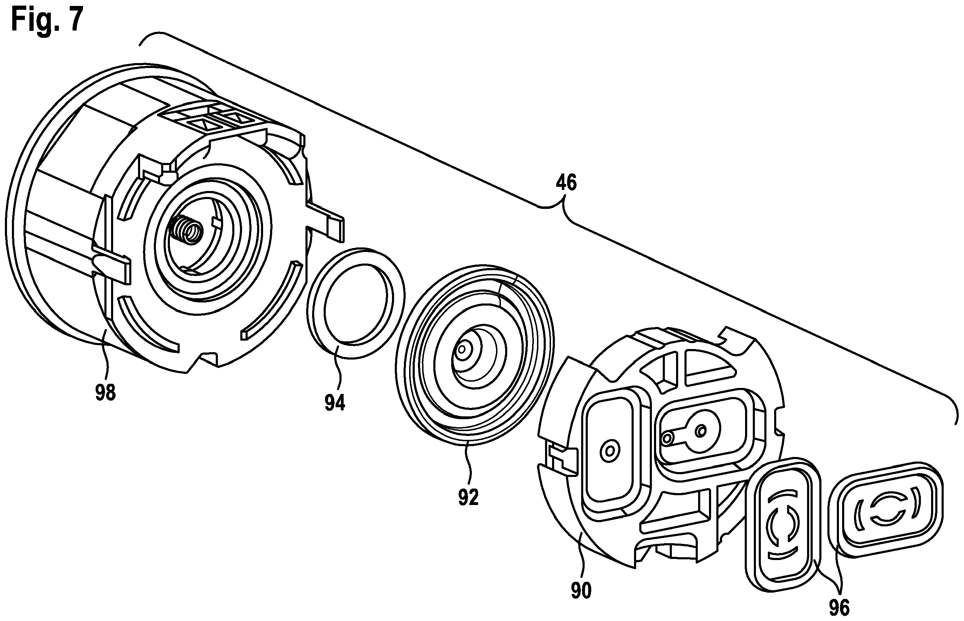

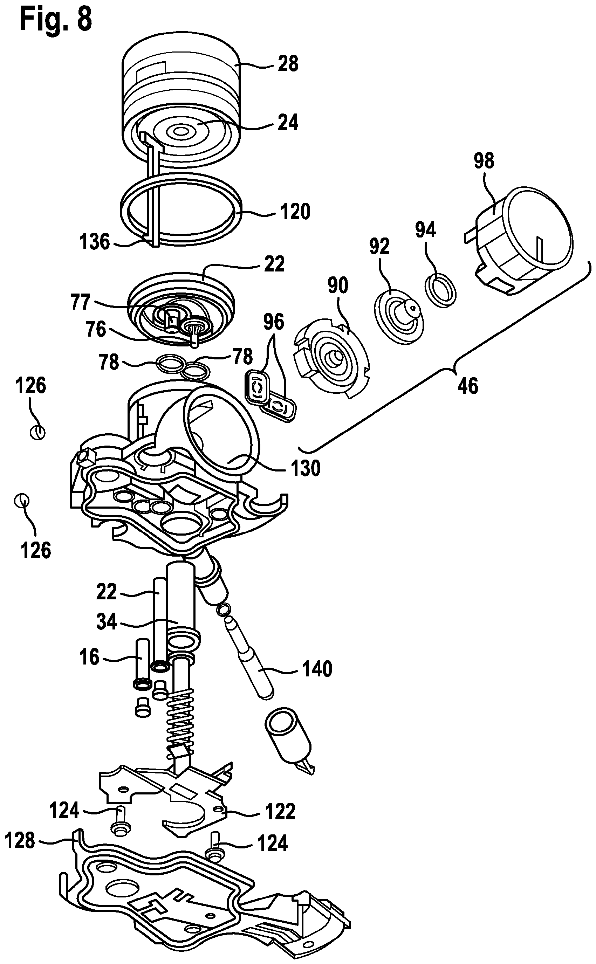

Die Magnetbaugruppe und die rücksaugpumpenrelevanten Teile der Ventilbaugruppe 22 stellen eine Vorbaugruppe dar, die vor dem Einbau in den Pumpenträger 90 vormontiert wird. Dies hat den Vorteil, dass die Montage nicht innerhalb des schwer zugänglichen Pumpengehäuses 98 erfolgt. Die Befestigung des Rücksaugpumpenmagneten 80 und der Rücksaugfördermembran 54 der Ventilbaugruppe 22 erfolgt beispielsweise mittels eines Schnapphakens (vergleiche Explosionsdarstellung gemäß Figur 8). Bei der Montage der Ventilbaugruppe 22 wird die relative Position des Tauchankers 92 und der Ventilbaugruppe 22 in Bezug auf den Rücksaugmagneten 80 durch Messung ermittelt. Abhängig vom Ergebnis dieser Messung erfolgt die Auswahl einer geeigneten Distanz- oder Einstellscheibe 94 (vergleiche Darstellung gemäß Figur 7), um eventuell auftretende Fertigungstoleranzen zu kompensieren. Die Anbindung der Rücksaugpumpe 46 an den Pumpenträger 90 erfolgt durch Verbindungsnähte 116, 118, die beispielsweise als Laserschweißnähte ausgeführt sein können (vergleiche auch Darstellung gemäß Figur 4). Dabei ist darauf zu achten, dass der Rücksaugpumpenmagnet 80 aus einem laserabsorbierenden Werkstoff und der Pumpenträger 90 aus einem lasertransparenten Material gefertigt sind.

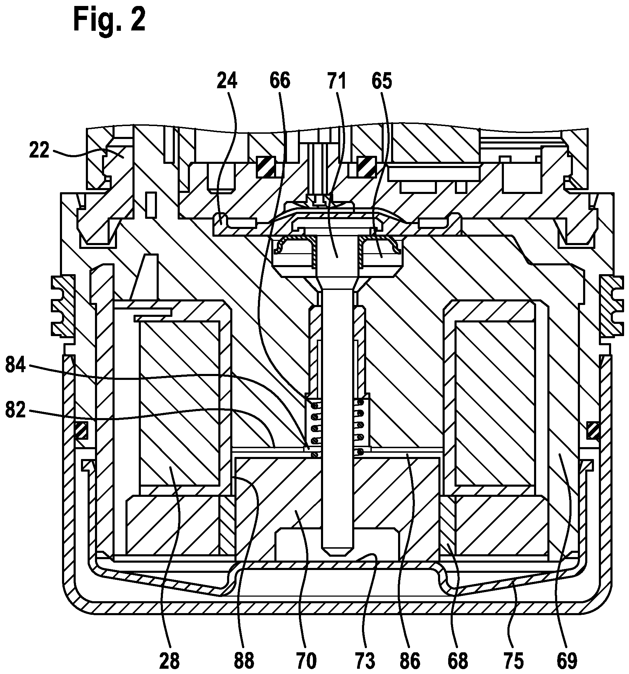

Figur 2 zeigt die Darstellung von Ventilbaugruppe und Fördermodul.

Unterhalb der gemeinsamen Ventilbaugruppe 22, in der das Ansaugventil 18 und das Druckventil 32 aufgenommen sind, befindet sich der Hubmagnet 28. Der Hubmagnet 28 umschließt einen Tauchanker 70, der beispielsweise formschlüssig mit der Fördermembran 24 verbunden ist. Bei der Bestromung des Hubmagneten 28 erfolgt eine Auf- und Abbewegung des Tauchankers 70, wodurch eine Förderung des Betriebs-/Hilfsstoffes durch Öffnen und Verschließen des Ansaugventiles 18 und des Druckventiles 32 erfolgt.

Der Hubmagnet 28 der den Druck aufbaut, weist eine Druckfeder 30 auf, die im bestromten Zustand einen Tauchanker 70 mit einem angeschweißten Führungsanker 71 auf die Elastomermembran 24 aufvulkanisiert wird, in einen unteren Totpunkt 73 bewegt. Der Anschlag erfolgt auf einen dafür vorgesehen Einstelltopf 75, der an einen Rückschlusstopf 69 angebunden ist. Bei Stromfluss wird die Einheit 70, 71 in einen oberen Totpunkt 82 bewegt. Der Tauchanker 70 mit seinem Nebenluftspalt 88 wird gegen einen Hauptluftspalt 86 angezogen und erfährt so eine zunehmende Kraft bei abnehmendem Luftspalt. Der Tauchanker 70 ist radial gelagert mittels einer Lagerbuchse 68, die gute Gleiteigenschaften aufweist und gleichzeitig den Magnetfluss durch einen hohen Eisenanteil begünstigt. Der Anker spannt eine Druckfeder vor und liegt nach Vollendung seines Hubs an einer Scheibe 84 an, die ein magnetisches Kleben verhindert. Dieser Anschlag selbst wird als Information verwendet, um die Druckhöhe im System zu ermitteln. Die Stromkennlinie wird durch den oberen Totpunkt 82 in eine Unstetigkeit gebracht, die sich ergebende Abweichung wird ermittelt und die Position dieser Unstetigkeit hinsichtlich Zeit und Stromhöhe als Information über den anliegenden Druck gewonnen.

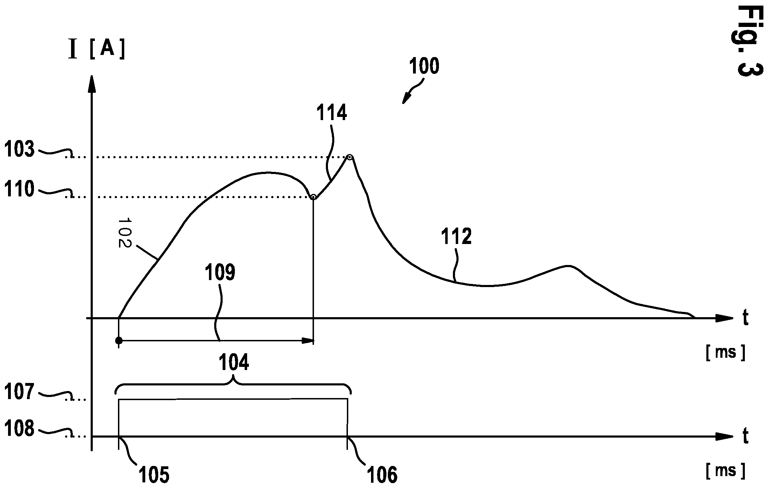

Der Darstellung gemäß Figur 3 ist der Stromverlauf einer Förderpumpe und die Bestromungsdauer derselben zu entnehmen.

Aus der Darstellung gemäß Figur 3 geht hervor, wie sich der Strom bei Bewegung des Tauchankers der Förderpumpe verändert. Während einer Ankerbewegungszeit 109 erfolgt ein Stromanstieg gemäß des Stromverlaufes 102 der Förderpumpe bis zu einem Stromwert 110 gegen Ende der Ankerbewegung. Danach erfolgt ein Stromanstieg entsprechend einer Flanke 114 auf einen Maximalstrom am Ende der Bestromung, vergleiche Position 103 in Figur 3. Während der Zeitspanne 109 und der Zeitdauer, während der die Flanke 114 anliegt, ist das Fördermodul 20 demnach bestromt, vergleiche Einschaltzeitpunkt 105 und Ausschaltzeitpunkt 106, welcher einer Bestromungsdauer der Förderpumpe bzw. des Fördermoduls 20 markieren. Während der Bestromungsdauer 104 nimmt der Strom ausgehend von einem Stromwert, der dem Ausgeschaltetsein entspricht ("Aus"), vergleiche Position 108 ab dem Abschaltzeitpunkt 105 einen einem Einschaltwert ("Ein"), vergleiche Position 107 in Figur 3 entsprechenden Wert an.

Nach dem Ausschaltzeitpunkt 106 fällt der Strom ab, vergleiche Nachlaufphase 112.

Die Veränderung des Stromwertes wird über eine Software ausgewertet und an das Ansteuergerät 40 als Information weitergeleitet. Über eine zugehörige Bedatungstabelle, die ebenfalls im Ansteuergerät 40 abgelegt ist, können die ermittelten Stromwerte den Drücken zugeordnet werden. Die Höhe der Ströme wird in Abhängigkeit von der Zeit analog zum in Figur 3 dargestellten Verlauf des Stromes ausgewertet. Sobald sich eine markante Änderung des Stromwertes ergibt, kann der zugehörige Druck bestimmt werden. Dieser charakteristische Verlauf des Stromes ist für den Hubmagneten 28 des Fördermoduls 20 sowie für den Rücksaugpumpenmagneten 80 der Rücksaugpumpe 46 charakteristisch, somit erkennbar und kann zur Druckauswertung herangezogen werden.

Figur 4 zeigt eine Darstellung der gemeinsamen Ventilbaugruppe zur Aufnahme des Ansaugventiles und des Druckventiles in vergrößertem Maßstab.

Aus Figur 4 geht hervor, dass das jeweils durch ein Federelement 138 beaufschlagte Ansaugventil 18 sowie das Druckventil 32 an der gemeinsamen Ventilbaugruppe 22 aufgenommen sind. Unterhalb der gemeinsamen Ventilbaugruppe 22 befindet sich die Fördermembran 24, die durch den im Zusammenhang mit Figur 3 bereits erwähnten Tauchanker 70 betätigt wird. Mittels eines Verbindungskanales 72 steht das auf der Druckseite angeordnete Druckventil 32 mit dem bei der vertikalen Auf- und Abbewegung der Fördermembran 24 entstehenden Druckraum in Verbindung.

Aus Figur 4 geht hervor, dass die Ventilbaugruppe 22 und die Magnetbaugruppe mit dem Tauchanker 70 über erste und zweite Verbindungsnähte 116 bzw. 118 relaxationsfrei miteinander verbunden sind. Die genannten Verbindungsnähte 116, 118 können beispielsweise als Laserschweißnähte ausgeführt sein. Wie die Schnittdarstellung gemäß Figur 4 des Weiteren zeigt, sind in der Ventilbaugruppe 22 das Ansaugventil 18 sowie das Druckventil 32, welches gleichzeitig einen Flutungsschutz darstellt, angeordnet. Das Ansaugventil 118 umfasst einen durch das Federelement 138 beaufschlagtes stiftförmiges Ventilglied 74, wobei sich das Federelement 138 in einem Einsatz 77 abstützt. Beim Druckventil 32 verhält es sich ähnlich; dieses umfasst einen Filterkäfig 76, an dem sich das Federelement 138, welches das Ventilglied 74 beaufschlagt, abstützt- Die stiftförmigen Ventilglieder 74 sind in Führungsrippen 119 vertikal geführt. Die Führungsrippen 119 können zum Beispiel in einer 120°-Teilung entlang eines Kreises um das Ventilglied 74 angeordnet sein. Figur 4 zeigt des Weiteren, dass die unterhalb der Ventilbaugruppe 22 liegende Fördermembran 24 durch dem Tauchanker 70 beaufschlagt ist. Der Verbindungskanal 72 verbindet den Elementenraum des in Figur 4 im Schnitt dargestellten Fördermodules mit dem Druckventil 32, welches gleichzeitig einen Flutungsschutz darstellt. Die beiden Verbindungsnähte 116 bzw. 118 sind als in Umfangsrichtung verlaufende stoffschlüssige Verbindungen, bevorzugt Laserschweißnähte ausgebildet.

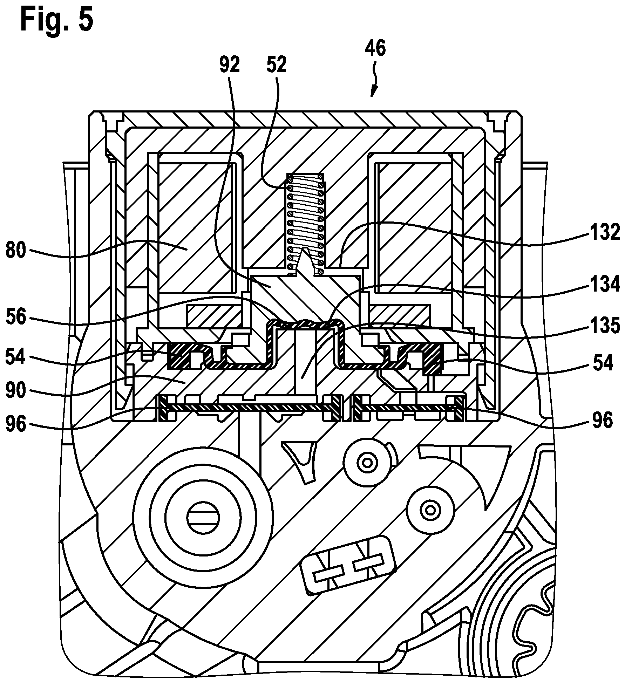

Figur 5 zeigt eine Darstellung der Rücksaugpumpe.

Die Rücksaugpumpe 46 gemäß der Darstellung in Figur 5 umfasst die bereits im Zusammenhang mit Figur 1 erwähnte Druckfeder 52, welche die Rücksaugfördermembran 54 in ihren Dichtsitz 56 stellt. Die Rücksaugfördermembran 54 ist durch den Pumpenträger 90 abgestützt, so dass der Deformationsgrad der Rücksaugfördermembran 54 relativ gering ist. Die Rücksaugfördermembran 54 ist in den Tauchanker 92 einvulkanisiert. Der Tauchanker 92 wiederum wird bei Bestromung des Rücksaugpumpenmagneten 80 in vertikale Richtung auf und ab bewegt, so dass sich eine den Betriebs-/Hilfsstoff fördernde Hubbewegung einstellt. Die Schnittdarstellung gemäß Figur 5 zeigt des Weiteren, dass der Tauchanker 92 in den die Rücksaugfördermembran 54 einvulkanisiert ist, durch die Druckfeder 52 in Richtung des Dichtsitzes 56 druckbeaufschlagt ist. Die Rücksaugfördermembran 54 verschließt eine Durchgangsbohrung 135, die sich durch den Pumpenträger 90 erstreckt und der den Elementenraum der Rücksaugpumpe 46 mit einem Raum unterhalb des Pumpenträgers 90 hydraulisch verbindet. Der Pumpenträger 90 weist an seiner Unterseite die Dichtplättchen 96 auf, die jeweils an Stegen befestigt sind. Mit Bezugszeichen 134 ist der obere Totpunkt der Rücksaugfördermembran 54, mit Bezugszeichen 132 der untere Totpunkt der Rücksaugfördermembran 54 bezeichnet. Zwischen dem unteren Totpunkt 132 und dem oberen Totpunkt 134 bewegt sich die Rücksaugfördermembran 54 gemäß der Bestromung des Rücksaugmagnetes 80, ausgelöst durch die Ansteuereinheit 40, in vertikaler Richtung auf und ab.

Mit einem Druckpulsationsdämpfer kann gemäß Figur 1 das System bei der Ausführung eines Förderhubes gegen hohe Druckspitzen geschützt werden. Damit diese Druckspitzen nicht zur Beschädigung anderer Bauteile führen, ist ein Druckpulsationsdämpfer vorgesehen. Dieser definiert die zulässige Druckbeanspruchung des Systems. Der Druckpulsationsdämpfer umfasst zum Beispiel ein erstes Stützkörperteil sowie ein zweites Stützkörperteil, die an einer Verbindungsstelle ineinandergesteckt sind. Die Aufgabe der beiden Stützkörper ist die Aufnahme einer Druckfeder. An der Verbindungsstelle sind die beiden Stützkörperteile beispielsweise mittels einer Clipverbindung oder einer Bajonettverbindung miteinander verbunden. Die Windungen der Druckfeder stehen so nahe zusammen, dass das Kunststoffmaterial der Wandung des Druckpulsationsdämpfers bei zunehmendem Druck nicht in die Zwischenräume zwischen einzelnen Federwindungen gelangt.

Der Darstellung gemäß Figur 6 ist eine Explosionszeichnung der Ventilbaugruppe zu entnehmen.

In der gemeinsamen Ventilbaugruppe 22 sind sowohl das Ansaugventil 18 als auch das Druckventil 32 untergebracht. Beide Ventile umfassen ein stiftförmiges Ventilglied 74, welches jeweils von einem Federelement 138 beaufschlagt ist. Mit Bezugszeichen 76 ist ein Filterkäfig bezeichnet, Position 78 bezeichnet einen Dichtring, der in der Aufnahmeebene der gemeinsamen Ventilbaugruppe 22 angeordnet ist. Das Ansaugventil 18 umfasst einen Einsatz 77, der das Federelement 138 umschließt und an dem sich dieses abstützt. Unterhalb der gemeinsamen Ventilbaugruppe 22 ist ein Ventilteller zu erkennen, der am unteren Ende des stiftförmig ausgebildeten Ventilgliedes 74 ausgeführt ist.

Figur 7 zeigt eine Explosionsdarstellung der Rücksaugpumpe.

Aus der Darstellung gemäß Figur 7 geht hervor, dass in dem dort dargestellten Gehäuse 98 der Rücksaugpumpe 46 eine Distanz- oder Einstellscheibe 94 eingelassen ist, die sich im montierten Zustand oberhalb des einvulkanisierten Tauchankers 92 befindet. Die Rücksaugfördermembran 54 ist in den Tauchanker 92 einvulkanisiert. Mit Bezugszeichen 90 ist der Pumpenträger bezeichnet, der die in den Tauchanker 92 einvulkanisierte Rücksaugfördermembran 54 abstützt, so dass deren Deformationsgrad begrenzt ist. Mit Bezugszeichen 96 sind Arretierungsclips bezeichnet.

Mittels der Arretierungsclips 96 werden die in Figur 7 in der Explosionsdarstellung dargestellten Komponenten der Rücksaugpumpe 46 derart formschlüssig miteinander verbunden, dass sich eine Vorbaugruppe darstellt, die in ein in der Explosionsdarstellung gemäß Figur 10 dargestelltes gemeinsames Gehäuse 130 montiert werden kann. Diese durch die geschweifte Klammer 46 in der Darstellung gemäß Figur 7 dargestellte Vorbaugruppe, lässt sich, da bereits fertig vormontiert, sehr einfach in eine dementsprechende Öffnung des gemeinsamen Gehäuses 130 (vergleiche Explosionsdarstellung gemäß Figur 8) einführen.

Figur 8 ist eine Explosionsdarstellung des Fördermoduls sowie der in einem gemeinsamen Gehäuse verbauten Komponenten von Förderpumpe und Rücksaugpumpe zu entnehmen.

In ein gemeinsames Gehäuse 130 ist von der Oberseite her der Hubmagnet 28 eingelassen, der die Fördermembran 24 umschließt. Zwischen der gemeinsamen Ventilbaugruppe 22 und dem Gehäuse des Hubmagneten 28 befindet sich eine Luftschalllippe 120. Aus der Explosionsdarstellung gemäß Figur 8 ergibt sich, dass der Hubmagnet 28, in dem die Fördermembran 24 samt durch diese verdeckte Ankerbaugruppe aufgenommen ist, über einen Schnapphaken 136 mit der Ventilbaugruppe 22 verbunden sein kann. Diese nimmt das in der Explosionsdarstellung gemäß Figur 8 dargestellte Ansaugventil 18 sowie das Druckventil 32 auf. Dichtringe 78, welche an den Sitzgeometrien für das Ansaugventil 18 bzw. das Druckventil 32 vorgesehen sind, befindet sich an der Unterseite der gemeinsamen Ventilbaugruppe 22 und sind mit Bezugszeichen 78 identifiziert. An der Unterseite der gemeinsamen Ventilbaugruppe 22 sind oberhalb der Dichtringe 78 der Einsatz 77 sowie der Filterkäfig 76 von Ansaugventil 18 bzw. Druckventil 32 zu erkennen. Seitlich an das gemeinsame Gehäuse 130 wird das Gehäuse 98, in dem der Rücksaugpumpenmagnet 80 eingelassen wird, montiert. Analog zur Darstellung gemäß Figur 7 umfasst die Rücksaugpumpe 46 die Distanz- und Einstellscheibe 94, den einvulkanisierten Tauchanker 92 sowie den Pumpenträger 90, an dessen Unterseite sich die Arretierungsclips 96 befinden. Die durch die geschweifte Klammer 46 in der Explosionsdarstellung in Figur 8 umschlossenen Teile entsprechen denjenigen, die in Figur 7 bereits dargestellt sind und durch Einsatz der Arretierungsclips 96 als vormontierte Baugruppe seitlich in die dementsprechende Öffnung des gemeinsamen Gehäuses 130 vormontierbar sind.

An der Unterseite des gemeinsamen Gehäuses 130 ist eine Flanschgeometrie ausgeführt. Die Flanschgeometrie dient der Aufnahme eines Wärmeleitbleches 122 zur Verbindung desselben mit dem gemeinsamen Gehäuse 130 sind Befestigungselemente 124 vorgesehen.

Ferner zeigt Figur 8, dass ein Druckpulsationsdämpfer 34 ebenfalls im gemeinsamen Gehäuse 130 des Systems aufgenommen sein kann, ebenso wie Eisdruckdämpfer 16 und 62 aufgenommen. Mit Bezugszeichen 126 sind Dichtkugeln bezeichnet, Position 128 bezeichnet eine Kontaktleiste.

In entsprechende Bohrungen des gemeinsamen Gehäuses 30 können besagte Eisdruckdämpfer 16 und 62 bzw. der Druckpulsationsdämpfer 34 aufgenommen sein. Seitlich in das gemeinsame Gehäuse 130 kann eine Wärmeleithülse 150 montiert werden, die ebenfalls als in Explosionsdarstellung dargestellt ist.

Über die Distanz- und Einstellscheibe 94 kann die Hubhöhe des Rücksaugpumpenmagneten 80 in Abhängigkeit von Bauteiltoleranzen angepasst werden. Die Bauteiltoleranzen werden während der Produktion nach Vermessung der Rücksaugfördermembran 54 mit Ventilplatte 22 und dem Rücksaugpumpenmagneten 80 entsprechend gepaart. Gemäß den Darstellungen in den Figuren 7 und 8 in Bezug auf die dort in Explosionsdarstellung dargestellten Komponenten der Rücksaugpumpe 46 kann der Pumpenträger 90 mit einer Umspritzung des Rücksaugpumpenmagneten 80 verclipst sein. In vorteilhafter Weise umfasst die Rücksaugfördermembran 54 einen ferromagnetische Eigenschaften aufweisende Metallteilteil sowie einen aufvulkanisierten Teil aus einem elastischen Material, wie beispielsweise Gummi. Die Rücksaugfördermembran 54 wird mittels der Druckfeder 52 in ihren domförmig ausgebildeten Dichtsitz am Pumpenträger 90 gedrückt. In der Explosionsdarstellung gemäß Figur 8 dargestellten Dichtkugeln 126 können die offenen Kanäle des gemeinsamen Gehäuses 130 gegen die Umgebung abgedichtet werden. So kann verhindert werden, dass der Betriebs-/Hilfsstoff, d.h. das gefrierfähige Reduktionsmedium im Ansaugmodus und im Rücksaugmodus austritt. Um die gesamten Kanäle im Wege des Spritzgussverfahrens abbilden zu können, ist es erforderlich, diese offenen, später durch die Dichtkugeln 126 zu verschließenden Kanäle zu erstellen. Diese sind beim Aufbau des Fördermodules 20 durch eben jene besagte Dichtkugeln 126 wieder zu verschließen.

## Patentansprüche

1. Einrichtung zur Förderung eines flüssigen Mediums, welches Gas-/Luft- oder Dampfanteile enthält, in einem Pumpmodus (58) oder einem Rücksaugmodus (60), **dadurch gekennzeichnet, dass** eine Ansteuereinrichtung (40) im Pumpmodus (58) einen Hubmagneten (28) einer volumetrischen Förderpumpe (20) für eine Fördermembran (24), die durch ein Stützelement (65) abgestützt ist und im Rücksaugmodus (60) einen Rücksaugmagneten (80) einer volumetrischen Rücksaugpumpe (46) für eine in einen Tauchanker (92) einvulkanisierte Rücksaugfördermembran (54) betätigt, wobei eine Drucküberwachung über eine Auswertung der Stromverläufe (102) der Magneten (28; 80) in der Ansteuervorrichtung (40) erfolgt, wobei bei Erreichen eines Stromwertes (110) bei Ende der Ankerbewegung, nach Ablauf der Ankerbewegungszeit (109) der Stromverlauf (102) einen flankenförmigen Anstieg (114) bis zum Erreichen eines Maximalstromes (103) ausführt.

2. Einrichtung gemäß einer der vorhergehenden Ansprüche, **dadurch gekennzeichnet, dass** ein Rücksaugkanal (44) vorgesehen ist, über welchen eine Dosierleitung (36), ein Druckpulsationsdämpfer (34) sowie ein Dosiermodul (38) im Rücksaugmodus (60) unmittelbar in eine Tankeinheit (10) entleerbar sind.

3. Einrichtung gemäß einem der vorhergehenden Ansprüche, **dadurch gekennzeichnet, dass** die Förderpumpe (20) ein federbeaufschlagtes Ansaugventil (18) und ein federbeaufschlagtes Druckventil (32) aufweist.

4. Einrichtung gemäß einem der vorhergehenden Ansprüche, **dadurch gekennzeichnet, dass** eine Deformation der Rücksaugfördermembran (54) begrenzt ist.

5. Einrichtung gemäß einem der hervorgehenden Ansprüche, **dadurch gekennzeichnet, dass** das Ansaugventil (18) und das Druckventil (32) in einer gemeinsamen Ventilbaugruppe (22) angeordnet sind.

6. Einrichtung gemäß einem der vorgehenden Ansprüche, **dadurch gekennzeichnet, dass** die Ventilbaugruppe (22) und eine Magnetbaugruppe (80) stoffschlüssig relaxationsfrei befestigt sind.

7. Einrichtung gemäß dem vorhergehenden Anspruch, **dadurch gekennzeichnet, dass** die Ventilbaugruppe (22) mit der Magnetbaugruppe (28) durch in Umfangsrichtung verlaufende Verbindungsnähte (116, 118) relaxationsfrei verbunden ist.

8. Einrichtung gemäß einem der vorhergehenden Ansprüche, **dadurch gekennzeichnet, dass** die Fördermembran (24) mit einem Tauchanker (70) stoff- oder kraftschlüssig verbunden ist, der bei der Bestromung des Hubmagneten (28) eine oszillierende Bewegung ausführt.

9. Einrichtung gemäß einem der vorhergehenden Ansprüche, **dadurch gekennzeichnet, dass** die Rücksaugfördermembran (54) von einem Pumpenträger (90) zur Minimierung der Verformung der Rücksaugfördermembran (54) abgestützt ist.

10. Einrichtung gemäß Anspruch 7, **dadurch gekennzeichnet, dass** das Ansaugventil (18) und das Druckventil (32) der gemeinsamen Ventilbaugruppe (22) jeweils durch ein Federelement (138) beaufschlagte stiftförmige Ventilglieder (74) aufweisen.

11. Einrichtung gemäß einem der vorhergehenden Ansprüche, **dadurch gekennzeichnet, dass** der Pumpenträger (90) einen Dichtsitz (56) und einen Durchgangskanal (135) umfasst.

12. Einrichtung gemäß einem der vorhergehenden Ansprüche, **dadurch gekennzeichnet, dass** während einer Bestromungsdauer des Fördermodules (20), insbesondere des Hubmagneten (28) ein Stromverlauf (102) durch einen kontinuierlichen Anstieg charakterisiert ist.

13. Einrichtung gemäß einem der vorhergehenden Ansprüche, **dadurch gekennzeichnet, dass** die Bestromungsdauer (104) des Fördermoduls (20), insbesondere des Hubmagneten (28) eine Zeitdauer (109) andauert, die die Ankerbewegung des Tauchankers (70) übersteigt.

14. Dosiersystem zur Eindosierung eines flüssigen Mediums, insbesondere eines Betriebs-/Hilfsstoffes, wie beispielsweise ein gefrierfähiges Reduktionsmedium, in den Abgastrakt einer Verbrennungskraftmaschine unter Verwendung einer Einrichtung zur Förderung eines flüssigen Mediums, wobei eine Drucküberwachung eines Systemdruckes über eine Auswertung der Stromverläufe (102) von Magneten (28, 80) in einer Ansteuervorrichtung (40) einer Einrichtung gemäß einem der Ansprüche 1 bis 13 erfolgt.

## Claims

1. Device for delivering a liquid medium, which contains gas/air or vapour fractions, in a pumping mode (58) or a sucking-back mode (60), **characterized in that** an activation apparatus (40) actuates in the pumping mode (58) a lifting magnet (28) of a volumetric delivery pump (20) for a delivery diaphragm (24) which is supported by a support element (65), and in the sucking-back mode (60) a sucking-back magnet (80) of a volumetric sucking-back pump (46) for a sucking-back delivery diaphragm (54) which is vulcanized in an armature plunger (92), wherein pressure monitoring is realized in the activation apparatus (40) via evaluation of the current profiles (102) of the magnets (28; 80), wherein, when a current value (110) is attained at the end of the armature movement, after the armature movement time (109) has elapsed, the current profile (102) has a rising slope (114) until the attainment of a maximum current (103).

2. Device according to one of the preceding claims, **characterized in that** provision is made of a sucking-back duct (44) via which, in the sucking-back mode, a dosing line (36), a pressure pulsation damper (34) and a dosing module (38) are able to be emptied directly into a tank unit (10).

3. Device according to either of the preceding claims, **characterized in that** the delivery pump (20) has a spring-loaded intake valve (18) and a spring-loaded pressure valve (32).

4. Device according to one of the preceding claims, **characterized in that** deformation of the sucking-back delivery diaphragm (54) is limited.

5. Device according to one of the preceding claims, **characterized in that** the intake valve (18) and the pressure valve (32) are arranged in a common valve assembly (22).

6. Device according to one of the preceding claims, **characterized in that** the valve assembly (22) and a magnet assembly (80) are fastened free of relaxation in materially bonded fashion.

7. Device according to the preceding claim, **characterized in that** the valve assembly (22) is connected free of relaxation to the magnet assembly (28) by connection seams (116, 118) running in the circumferential direction.

8. Device according to one of the preceding claims, **characterized in that** the delivery diaphragm (24) is connected in materially bonded or force-fitting fashion to an armature plunger (70), which performs an oscillating movement when the lifting magnet (28) is electrically energized.

9. Device according to one of the preceding claims, **characterized in that** the sucking-back delivery diaphragm (54) is supported by a pump carrier (90) for minimizing the deformation of the sucking-back delivery diaphragm (54) .

10. Device according to Claim 7, **characterized in that** the intake valve (18) and the pressure valve (32) of the common valve assembly (22) have pin-like valve members (74) which are each loaded by a spring element (138).

11. Device according to one of the preceding claims, **characterized in that** the pump carrier (90) comprises a sealing seat (56) and a passage duct (135).

12. Device according to one of the preceding claims, **characterized in that**, during an electrical energization duration for the delivery module (20), in particular for the lifting magnet (28), a current profile (102) is **characterized by** a continuous increase.

13. Device according to one of the preceding claims, **characterized in that** the electrical energization duration (104) for the delivery module (20), in particular for the lifting magnet (28), lasts for a time duration (109) which exceeds the armature movement of the armature plunger (70).

14. Dosing system for dosing a liquid medium, in particular an auxiliary/operating substance, such as for example a reduction medium which is capable of freezing, into the exhaust tract of an internal combustion engine using a device for delivering a liquid medium, wherein pressure monitoring of a system pressure is realized in an activation apparatus (40) of a device according to one of Claims 1 to 13 via evaluation of the current profiles (102) of magnets (28; 80).

## Revendications

1. Dispositif de transport d'un milieu liquide, qui contient des parts de gaz/air ou vapeur, dans un mode de pompage (58) ou un mode de ré-aspiration (60), **caractérisé en ce qu'**un dispositif de commande (40) actionne dans le mode de pompage (58) un aimant de levage (28) d'une pompe de transport volumétrique (20) pour une membrane de transport (24), qui est soutenue par un élément de soutien (65), et dans le mode de ré-aspiration (60) un aimant de ré-aspiration (80) d'une pompe de ré-aspiration volumétrique (46) pour une membrane de transport de ré-aspiration (54) vulcanisée dans un induit plongeur (92), dans lequel on opère une surveillance de la pression par une évaluation des courbes de courant (102) des aimants (28; 80) dans le dispositif de commande (40), dans lequel lors de l'atteinte d'une valeur de courant (110) à la fin du mouvement de l'induit, après l'expiration du temps de mouvement de l'induit (109), la courbe du courant (102) opère une hausse en forme de flanc (114) jusqu'à atteindre un courant maximal (103).

2. Dispositif selon la revendication précédente, **caractérisé en ce qu'**il est prévu un canal de ré-aspiration (44), par lequel une conduite de dosage (36), un amortisseur d'impulsions de pression (34) ainsi qu'un module de dosage (38) peuvent dans le mode de ré-aspiration (60) être vidés directement dans une unité de réservoir (10).

3. Dispositif selon l'une quelconque des revendications précédentes, **caractérisé en ce que** la pompe de transport (20) présente une soupape d'aspiration à ressort (18) et une soupape de refoulement à ressort (32) .

4. Dispositif selon l'une quelconque des revendications précédentes, **caractérisé en ce qu'**une déformation de la membrane de transport de ré-aspiration (54) est limitée.

5. Dispositif selon l'une quelconque des revendications précédentes, **caractérisé en ce que** la soupape d'aspiration (18) et la soupape de refoulement (32) sont disposées dans un sous-groupe de soupapes commun (22).

6. Dispositif selon l'une quelconque des revendications précédentes, **caractérisé en ce que** le sous-groupe de soupapes (22) et un sous-groupe d'aimants (80) sont fixés matériellement sans relaxation.

7. Dispositif selon l'une quelconque des revendications précédentes, **caractérisé en ce que** le sous-groupe de soupapes (22) est assemblé sans relaxation au sous-groupe d'aimants (28) par des soudures d'assemblage (116, 118) courant en direction périphérique.

8. Dispositif selon l'une quelconque des revendications précédentes, **caractérisé en ce que** la membrane de transport (24) est assemblée matériellement ou par adhérence à un induit plongeur (70), qui exécute un mouvement oscillant lors de l'alimentation de l'aimant de levage (28).

9. Dispositif selon l'une quelconque des revendications précédentes, **caractérisé en ce que** la membrane de transport de ré-aspiration (54) est soutenue par un support de pompe (90) pour minimiser la déformation de la membrane de transport de ré-aspiration (54) .

10. Dispositif selon la revendication 7, **caractérisé en ce que** la soupape d'aspiration (18) et la soupape de refoulement (32) du sous-groupe de soupapes commun (22) présentent respectivement des organes de soupape en forme de tiges (74) soumis à un élément de ressort (138).

11. Dispositif selon l'une quelconque des revendications précédentes, **caractérisé en ce que** le support de pompe (90) comprend un siège d'étanchéité (56) et un canal de passage (135).

12. Dispositif selon l'une quelconque des revendications précédentes, **caractérisé en ce que** pendant une durée d'alimentation du module de transport (20), en particulier de l'aimant de levage (28), une courbe de courant (102) est **caractérisée par** une hausse continue.

13. Dispositif selon l'une quelconque des revendications précédentes, **caractérisé en ce que** la durée d'alimentation (104) du module de transport (20), en particulier de l'aimant de levage (28), est une durée (109) qui dépasse le mouvement d'induit de l'induit plongeur (70) .

14. Système de dosage pour le dosage d'un milieu liquide, en particulier d'un agent auxiliaire/adjuvant, comme par exemple d'un milieu réducteur congelable, dans le tuyau d'effluents gazeux d'un moteur à combustion interne avec utilisation d'un dispositif de transport d'un milieu liquide, dans lequel on opère une surveillance de la pression d'une pression de système par une évaluation des courbes de courant (102) d'aimants (28, 80) dans un dispositif de commande (40) d'un dispositif selon l'une quelconque des revendications 1 à 13.
